# EUROPÄISCHE PATENTANMELDUNG

(11) **EP 1 357 215 A1**
(43) Veröffentlichungstag der Anmeldung: **29.10.2003**
(21) Anmeldenummer: 03008999.9
(22) Anmeldetag: 17.04.2003
(51) Int. Cl.: D04B 15/00, F16P 3/08

(54) **Rundstrickmaschine und dafür geeignete Schutzvorrichtung**

(30) Priorität: 22.04.2002 DE 10218221
(71) Anmelder: SIPRA Patententwicklungs- und Beteiligungsgesellschaft mbH, D-72461 Albstadt (DE)
(72) Erfinder: Schaut, Bernhard, 72459 Albstadt (DE); Tränkle, Dietmar, 72336 Balingen (DE)
(74) Vertreter: Freiherr von Schorlemer, Reinfried, Dipl.-Phys.

(57) **Zusammenfassung**

Die Erfindung betrifft eine Rundstrickmaschine mit einer ihre Abzugs- und/oder Aufwickelvorrichtung (15) von außen zumindest teilweise umgebenden Schutzabdeckung (17), die eine am Maschinengestell befestigte Führung und an dieser verschiebbar gelagerte Segmente (18 bis 23) enthält. Erfindungsgemäß sind die Segmente (18 bis 23) mit unterschiedlichen radialen Abständen von einer Maschinenachse (11) und derart angeordnet, daß sie zumindest teilweise mit gegenseitiger Überlappung relativ zueinander verschiebbar sind (Fig. 4).

## Beschreibung

Die Erfindung betrifft eine Rundstrickmaschine der im Oberbegriff des Anspruchs 1 angegebenen Gattung und eine dafür geeignete Schutzvorrichtung.

Bei Rundstrickmaschinen ist es zum Schutz des Bedienungspersonals erforderlich, die sich drehenden Teile und insbesondere die Abzugs- und/oder Aufwickelvorrichtung mit einer Schutzabdeckung zu versehen. Die bekannten Schutzabdeckungen können allerdings nicht voll befriedigen, da sie das Bedienungspersonal zwar ausreichend vor Verletzungen schützen, gleichzeitig aber auch den Zugang zur Maschine erschweren. Die Schutzabdeckung müßte daher aus leicht montierbaren bzw. demontierbaren Elementen zusammengesetzt sein, was mit viel Aufwand und hohen Kosten verbunden wäre.

Damit bei Bedarf ein einfacher Zugang wenigstens zur Abzugs- und/oder Aurwickelungvorrichtung und damit z. B. eine leichte Entnahme des fertigen Warenballens möglich ist, weisen derartige Schutzabdeckungen häufig eine Tür mit wenigstens einem Türsegment auf, das um eine vertikale Achse radial nach außen schwenkbar ist (US-PS 4 033 147). Dadurch ergibt sich allerdings die Notwendigkeit, am Umfang der Rundstrickmaschine einen vergleichsweise großen Freiraum vorzusehen, der ein unbehindertes Öffnen der klappbaren Türsegmente ermöglicht, insbesondere wenn es sich um Rundstrickmaschinen mit großen Durchmessern oder um Rundstrickmaschinen handelt, bei denen die schlauchförmige Strickware vor dem Aufwickeln an einer Längsseite aufgeschnitten und zu einer einlagigen Warenbahn ausgebreitet wird. Außerdem davon müßten am Umfang der Rundstrickmaschine mehrere solcher Türen oder zusätzliche lösbare Segmente vorgesehen werden, wenn ein Zugang zur Maschine auch an außerhalb der zur Entnahme des Warenballens bestimmten Stellen möglich sein soll.

Bei einer bekannten Rundstrickmaschine der eingangs bezeichneten Gattung (DE 199 24 217 A1) sind anstelle von klappbaren Elementen zwei über einen Teil ihres Umfangs erstreckte Türsegmente vorgesehen, die horizontal und in Umfangsrichtung verschiebbar an einer am Maschinengestell befestigten Führung gelagert sind. Dadurch wird zwar kein zusätzlicher Raum für das Aufklappen von Türsegmenten benötigt, doch kann auch mit einer solchen Schiebetür nicht vermieden werden, daß der Zugang zur Rundstrickmaschine von anderen Seiten als der Türöffnung her behindert ist.

Abgesehen davon erschweren die beschriebenen Schutzabdeckungen im geschlossenen Zustand auch den Zugang zu den in einem oberen Bereich des Gestells angeordneten Schloßsegmenten, Fadenführern und sonstigen zur Herstellung der Strickware verwendeten Mitteln. Dies gilt insbesondere für kleinere Personen und Rundstrickmaschinen mit großen Durchmessern und Vorrichtungen zur Ausbreitung der Strickware zu einer einlagigen Bahn, da die Schutzabdeckung meistens einen unteren, im wesentlichen zylindrischen Abschnitt und einen daran anschließenden oberen, schräg bzw. konisch bis zu einem oberen Tragring ansteigenden Abschnitt aufweist und daher insgesamt vergleichsweise hoch ist und radial weit nach außen vorsteht. Diesem Mangel kann zwar teilweise mit ebenfalls bereits bekannten Rundstickmaschinen abgeholfen werden (EP 0 301 685 B1), bei denen ein oberer Abschnitt der Schutzabdeckung vertikal verschiebbar ausgebildet ist. Hierdurch erhöht sich der konstruktive Aufwand jedoch erheblich, insbesondere wenn die Schutzabdeckung rundum sowohl mit aufklappbaren oder horizontal verschiebbaren Segmenten als auch mit vertikal verschiebbar an diesen gelagerten Abschnitten versehen sein soll.

Ausgehend von diesem Stand der Technik soll durch die vorliegende Erfindung das technische Problem gelöst werden, die Rundstrickmaschine der eingangs bezeichneten Gattung mit einer Schutzvorrichtung zu versehen bzw. zu umgeben, die auf einfache Weise an unterschiedlichen Stellen geöffnet und bei Bedarf so ausgebildet werden kann, daß ein Zugang sowohl zu den die Strickware produzierenden Mitteln als auch zur Abzugsund/oder Aufwickelvorrichtung von allen Seiten her möglich ist.

Zur Lösung dieses Problems dienen die kennzeichnenden Merkmale des Anspruchs 1 und 13.

Weitere vorteilhafte Merkmale der Erfindung ergeben sich aus den Unteransprüchen.

Die Erfindung wird nachfolgend in Verbindung mit den beiliegenden Zeichnungen an einem Ausführungsbeispiel näher erläutert. Es zeigen:
Fig. 1 eine schematische Seitenansicht einer erfindungsgemäßen Rundstrickmaschine mit einer teilweise geöffneten Schutzabdeckung aus Richtung des Pfeils x in Fig. 3;
Fig. 2 eine vergrößert dargestellte Einzelheit X der Fig. 1;
Fig. 3 einen schematischen Horizontalschnitt durch die Rundstrickmaschine längs der Linie III-III der Fig. 1 in Höhe einer Aufwickelwalze und im geschlossenen Zustand der Schutzabdeckung;
Fig. 4 einen Schnitt entsprechend Fig. 3, jedoch in einer zur Entnahme eines Warenballens geeigneten Offenstellung der Schutzabdeckung;
Fig. 5 und 6 der Fig. 3 entsprechende Schnitte, jedoch in zwei weiteren möglichen Offenstellungen der Schutzabdeckung; und
Fig. 7 schematisch eine elektrische Leitung mit Schaltern zur Unterbrechung des Antriebs der Rundstrickmaschine bei geöffneter Schutzabdeckung.

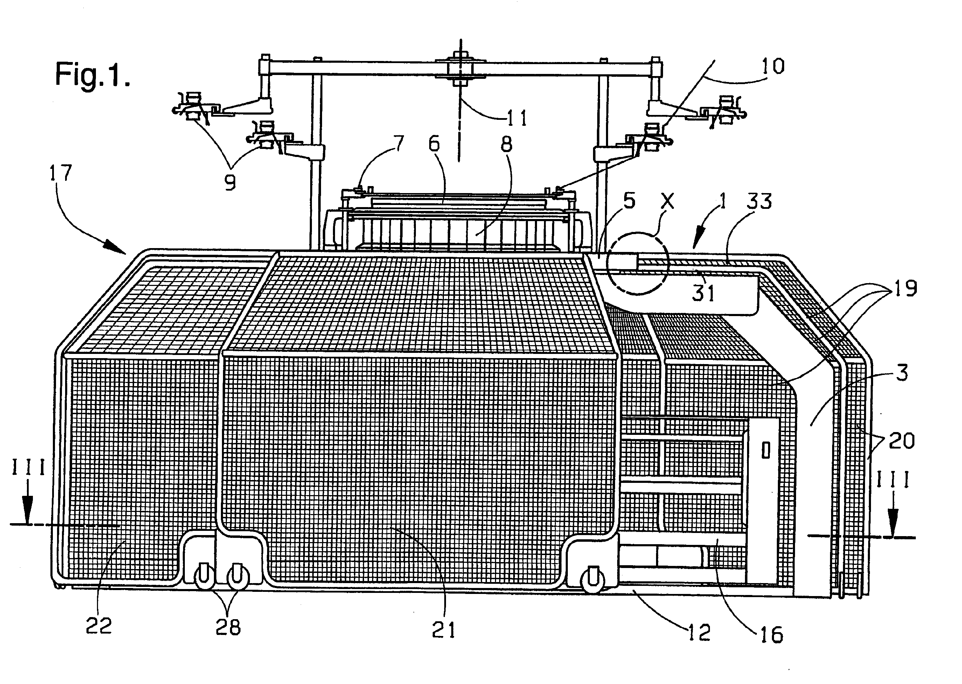

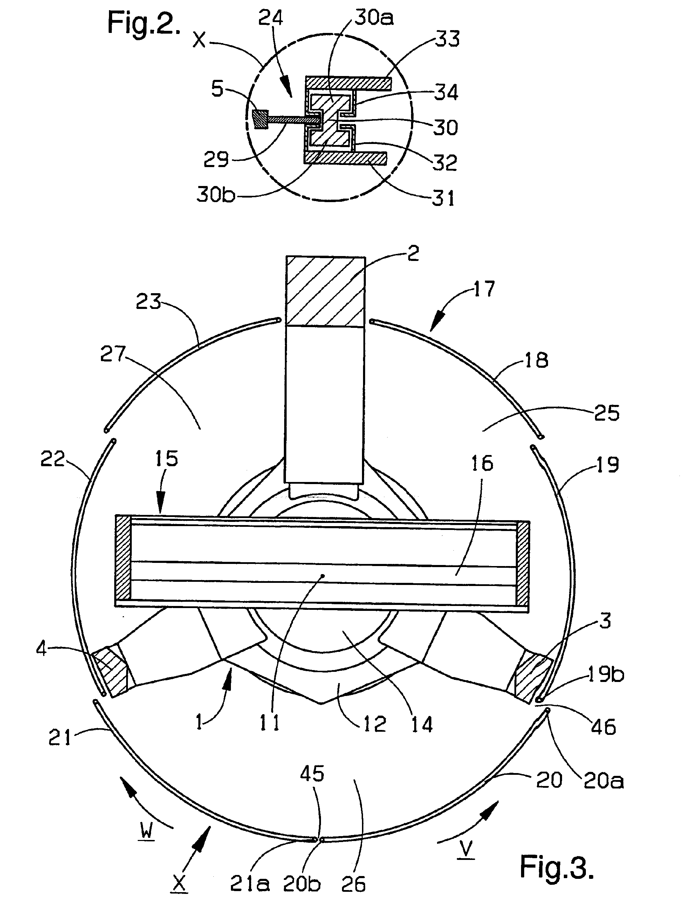

Fig. 1 bis 3 zeigen schematisch eine Rundstrickmaschine mit einem Gestell 1, das eine Mehrzahl von Füßen 2, 3 und 4 (Fig. 3) aufweist, auf denen ein Tragring 5 (Fig. 1, 2) abgestützt ist. Der Tragring 5 dient z. B. zur drehbaren Lagerung eines Nadelzylinders 6 sowie zur stationären Lagerung eines mit einer Vielzahl von Fadenführern versehenen Fadenführerrings 7, eines den Nadelzylinder 6 umgebenden Schloßmantels 8, einer Mehrzahl von Fadenzuführvorrichtungen 9, um den im Nadelzylinder 6 gelagerten Stricknadeln Fäden 10 zuzuführen, und von anderen Bauelementen, die hier insgesamt kurz als Mittel zur Herstellung einer schlauchförmigen Strickware bezeichnet sind.

Die Füße 3 und 4 sind im Ausführungsbeispiel mit Winkelabständen von ca. 110° vom Fuß 2 beabstandet, wärend der Winkelabstand der Füße 3, 4 voneinander ca. 140° beträgt, und mit einem ausreichenden radialen Abstand von einer zentralen Maschinenachse 11 (Fig. 1) angeordnet. Dabei ist der Fuß 2 ein Hauptfuß, der zur Aufnahme eines nicht näher dargestellten Antriebsmotors oder sonstiger elektrischer bzw. elektronischer Baugruppen sowie von Bedienelementen für die Rundstrickmaschine dient, während die Füße 3 und 4 Seitenfüße sind, die bis auf eine gegebenenfalls vorhandene Schalteinheit frei von derartigen Baueinheiten sind.

Unterhalb des Tragrings 5 und in dem von den Füßen 2, 3 und 4 umgrenzten Bereich weist das Gestell 1 einen unteren Tragring 12 (Fig. 3) auf, in dem ein Drehteller 14 drehbar gelagert ist. Auf dem Drehteller 14 ist eine allgemein mit dem Bezugszeichen 15 bezeichnete Abzugs- und/oder Aufwickelvorrichtung montiert, mittels derer die Strickware abgezogen und aufgewickelt werden kann. Dabei ist es im Prinzip gleichgültig, ob die Strickware von der Vorrichtung 15 nur abgezogen, nur aufgewickelt oder abgezogen und aufgewickelt wird.

In Fig. 3 bis 6 ist schematisch jeweils eine Aufwickelwalze 16 der Vorrichtung 15 dargestellt, auf die die in der Rundstrickmaschine produzierte Strickware aufgewickelt wird. Daher ist der Winkelabstand zwischen den beiden Seitenfüßen 3, 4 mit z. B. ca. 140° so gewählt, daß die Aufwickelwalze 16 im vollbewickelten Zustand z. B. in der aus Fig. 3 ersichtlichen Relativstellung im wesentlichen in Richtung eines Pfeils x bzw. senkrecht in ihrer Achse zwischen den Seitenfüßen 3, 4 hindurch nach vorn herausgenommen und durch eine neue Aufwickelwalze 16 ersetzt werden kann.

Die Rundstrickmaschine ist ferner mit einer Schutzabdeckung 17 (Fig. 1) versehen, die sich im wesentlichen vom Tragring 5 bis zu den unteren Enden der Füße 2, 3 und 4 erstreckt und die Vorrichtung 15 an ihrem äußeren Umfang abdeckt, um beim Betrieb der Rundstrickmaschine Verletzungen des Bedienungspersonals durch sich drehende Teile zu vermeiden. Die Schutzabdeckung enthält, wie weiter unten näher erläutert wird, mehrere Segmente 18 bis 23, die an einer am Gestell 1 befestigten Führung 24 (Fig. 2) verschiebbar gelagert sind.

Rundstrickmaschinen dieser Art sind dem Fachmann allgemein bekannt (z. B.
EP 0 301 658 A2, DE 199 24 217 A1) und brauchen daher nicht näher erläutert werden.

Bei dem in Fig. 3 bis 6 schematisch dargestellten, bisher für am besten gehaltenen Ausführungsbeispiel der Erfindung weist die Schutzabdeckung 17 insgesamt 6 Segmente 18 bis 23 auf. Dabei sind einem Raum 25 zwischen den Füßen 2 und 3 die beiden Segmente 18 und 19, einem Raum 26 zwischen den Füßen 3 und 4 die beiden Segmente 20 und 21 und einem Raum 27 zwischen den beiden Füßen 4 und 2 die beiden Segmente 22 und 23 derart zugeordnet, daß diese Segmente 18 bis 23 die betreffenden Räume 25 bis 27 in einer aus Fig. 3 ersichtlichen Schließstellung vollständig abdecken. Dabei stehen sich, wie Fig. 3 zeigt, seitliche Längskanten (z. B. 19b, 20a bzw. 20b, 21a) vorzugsweise unter Bildung so enger vertikaler Spalte 45, 46 gegenüber, daß ein unbeabsichtigtes Durchstecken eines Fingers, eines Fußes od. dgl. unmöglich ist. Außerdem sind die Segmente 18 bis 23 erfindungsgemäß mit unterschiedlichen radialen Abständen von der in Fig. 3 durch einen Punkt angedeuteten, senkrecht zur Zeichenebene verlaufenden Maschinenachse 11 angeordnet. Insbesondere ist die Anordnung im Ausführungsbeispiel so, daß - ausgehend vom Hauptfuß 2 und im Uhrzeigersinn betrachtet - das erste, dritte, vierte und sechste Segment 18, 20, 21 und 23 einen größeren radialen Abstand als das zweite und fünfte Segment 19, 22 von der Maschinenachse 11 aufweisen.

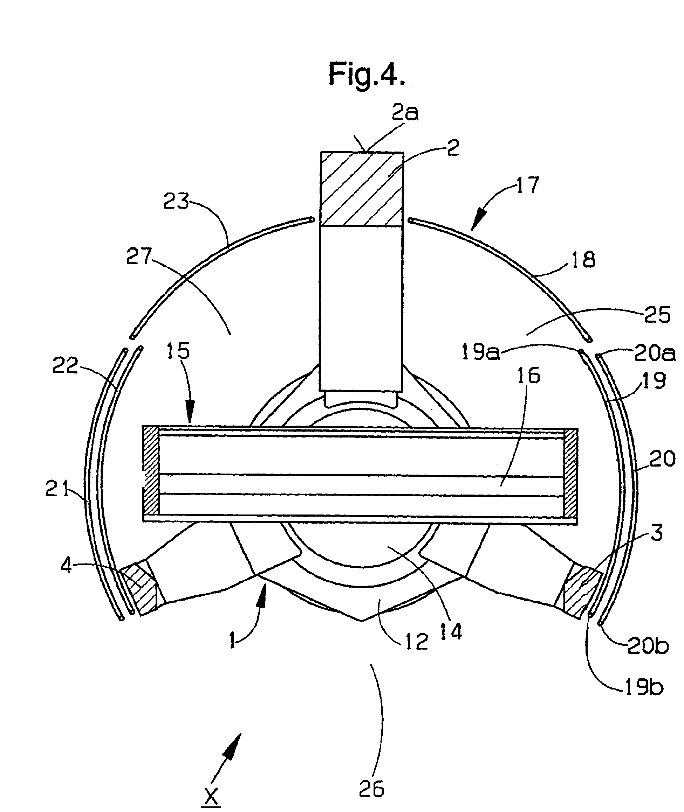

Die unterschiedlichen radialen Abstände der Segmente 18 bis 23 von der Maschinenachse 11 sind so gewählt, daß die Segmente 18 bis 23 zumindest teilweise mit gegenseitiger Überlappung relativ zueinander verschoben werden können. Unter "gegenseitiger Überlappung" wird dabei verstanden, daß z. B. das Segment 20, ausgehend von der Schließstellung nach Fig. 3, in Umfangsrichtung (Pfeil v) und im Gegenuhrzeigersinn in eine aus Fig. 4 ersichtliche Offenstellung verschoben werden kann, in der es nicht neben, sondern unmittelbar vor dem Segment 19 angeordnet ist, so daß die betreffenden Längskanten 19a, 20a bzw. 19b, 20b beider Segmente 19, 20 paarweise im wesentlichen bündig miteinander abschließen. In dieser Stellung überlappt das Segment 20 daher das Segment 19 mit seiner gesamten Ausdehnung. In entsprechender Weise wird in Fig. 4 das Segment 22 nach einer Verschiebung des Segements 21 im Uhrzeigersinn, d. h. in Richtung eines Pfeils w (Fig. 3), vollständig von diesem überlappt bzw. nach außen abgedeckt.

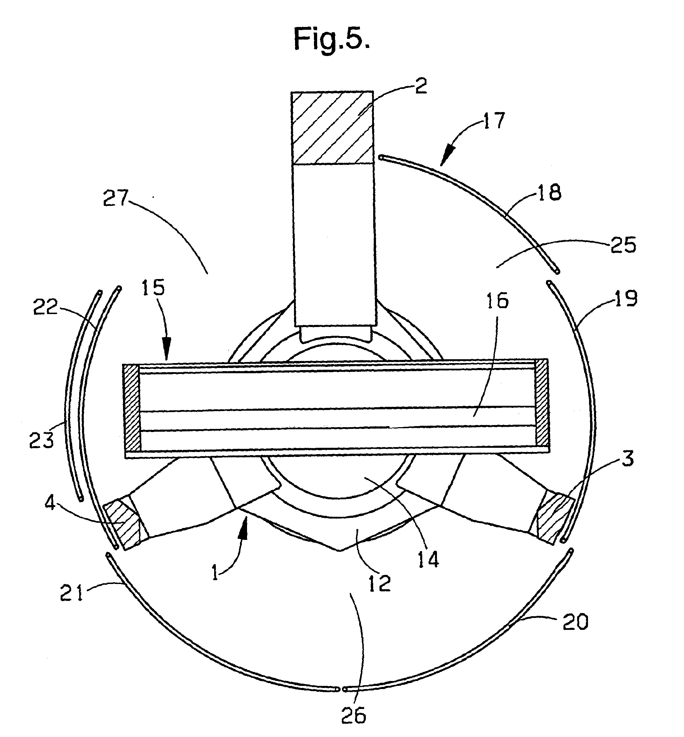

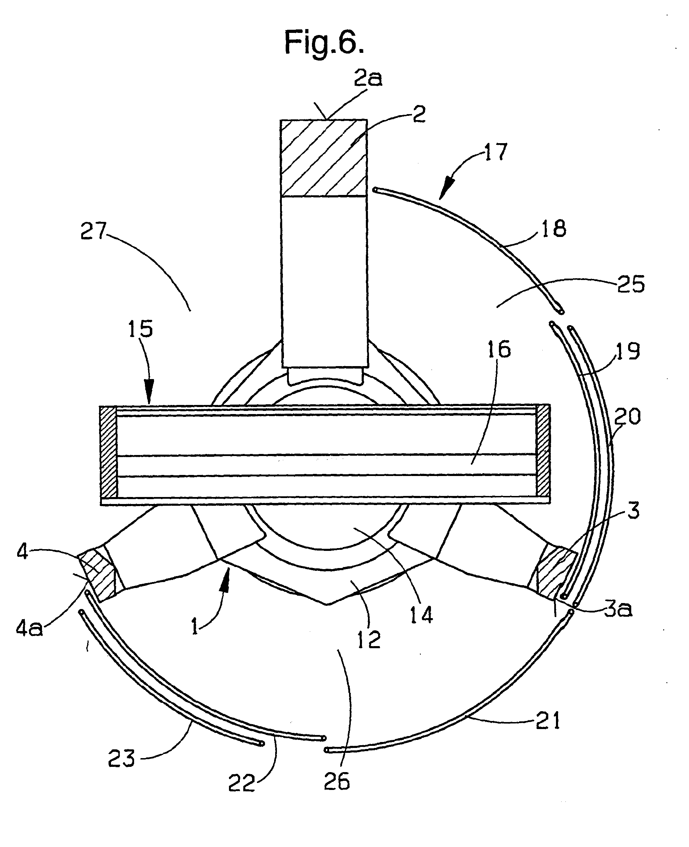

Die erfindungsgemäße Anordnung und Verschiebbarkeit der Segmente 18 bis 23 mit unterschiedlichen Abständen von der Maschinenachse 11 ermöglicht es, die Räume 25 bis 27 ganz nach Belieben freizugeben oder abzudecken. In der Schließstellung nach Fig. 3 sind alle drei Räume 25 bis 27 hermetisch verschlossen. In Fig. 4 ist der Raum 26 vollständig geöffnet, so daß der auf die Aufwickelwalze 16 aufgewickelte Warenballen nach vorn herausgenommen werden kann. Fig. 5 zeigt eine Stellung, in welcher der Raum 27 etwa auf seiner halben Breite zugänglich ist. Dies kann dadurch erreicht werden, daß das Segment 23, ausgehend von der Schließstellung nach Fig. 3 im Gegenuhrzeigersinn verschoben wird, bis es das benachbarte Segment 22 zumindest teilweise oder, wie Fig. 5 zeigt, vollständig überlappt. Ist es erwünscht, den Raum 27 auf seiner ganzen Breite freizugeben (Fig. 6), wird zunächst das Segment 20 entsprechend Fig. 4 über das Segment 19 geschoben. Danach wird das Segment 21 im Gegenuhrzeigersinn verschoben, bis es diejenige Position einnimmt, die in Fig. 3 das Segment 20 einnimmt. Anschließend werden dann die beiden Segmente 22 und 23 einzeln nacheinander oder auch teilweise gemeinsam im Gegenuhrzeigersinn verschoben, bis sie gemäß Fig. 6 in derjenigen Stellung angeordnet sind, die in Fig. 3 für das Segment 21 gezeigt ist. In analoger Weise könnte der Raum 25 durch Verschiebung der Segmente 18 bis 21 ganz oder teilweise freigegeben werden.

Durch die erfindungsgemäße Anordnung und Ausbildung der Segmente 18 bis 23 der Schutzabdeckung 17 wird somit ein hohes Maß an Flexibilität beim Freigeben bzw. Verschließen der Räume 25 bis 27 erreicht. Obwohl sich die Schutzabdeckung 17 rund um die Maschinenachse 11 herum erstreckt, kann jeder Bereich der zwischen den Füßen 2 bis 4 befindlichen Räume 25 bis 27 je nach Bedarf teilweise, bis zur Hälfte oder auch ganz zugänglich gemacht werden. Hierdurch ist es dem Bedienungspersonal am gesamten Umfang der Rundstrickmaschine möglich, durch einfaches Verschieben wenigstens eines der Segmente 18 bis 23 den für Arbeiten an der Rundstrickmaschine erforderlichen Platz zu schaffen, um nahe an die zum Stricken benötigten Mittel herantreten zu können, wie es z. B. beim Einstellen von Schloßteilen, beim Einfädeln von Fäden od. dgl. erforderlich bzw. erwünscht ist. Der Freiraum kann dabei wahlweise z. B. ca. ein Drittel oder ein Sechstel des Umfangs betragen.

Wie Fig. 3 bis 6 Weiter zeigen, ist die Anordnung im Ausführungsbeispiel derart, daß die radialen Abstände aller Segmente 18 bis 23 von der Maschinenachse 11 größer als radiale Endflächen 3a, 4a (Fig. 6) der Seitenfüße 3, 4 von der Maschinenachse 11 sind. Dadurch ist es möglich, auch die radial innen liegenden Segmente 19 und 22 in Umfangsrichtung an den Seitenfüßen 3, 4 vorbei zu verschieben. Die inneren Segmente werden dabei auf einer Kreisbahn bewegt, deren Radius wenigstens gleich einem von den Endflächen 3a, 4a definierten Umkreis ist. Dagegen ist es bei der im Ausführungsbeispiel dargestellten Anordnung nicht erforderlich, die Segmente 18 bis 23 mit so großen radialen Abständen anzuordnen, daß sie auch am radial längeren Hauptfuß 2 vorbei bewegt werden können, obwohl dies bei Bedarf ebenfalls möglich wäre.

Die Verschiebbarkeit der Segmente 18 bis 23 in Umfangsrichtung (Pfeil v und w in Fig. 3) wird vorzugsweise mit Hilfe der aus Fig. 1 und 2 ersichtlichen Führung 24 bewirkt. Diese ist kreisringförmig und koaxial zur Maschinenachse 11 ausgebildet und z. B. in einer solchen Höhe angeordnet, daß sie obere Enden der Segmente 18 bis 23 erfaßt, während untere Enden der Segmente 18 bis 23 vorzugsweise mittels drehbaren Laufrollen oder Rädern 28 am Erdboden abgestützt sind. Zu diesem Zweck ist die Führung 24, die z. B. bis unmittelbar an die beiden Seitenteile des Hauptfußes 2 angrenzt und dort endet, mit Hilfe von radial angeordneten Tragstangen 29 am Tragring 5 befestigt.

Gemäß Fig. 1 und 2 enthält die Führung 24 einen kreisförmig angeordneten, in Umfangsrichtung verlaufenden und an den Tragstangen 29 befestigten Träger 30. Dieser ist z. B. nach Art eines I- bzw. Doppel-T-Trägers ausgebildet und mit je einem in Umfangsrichtung erstreckten, oberen und unteren Führungsteil 30a, 30b versehen. Das obere Führungsteil 30a dient zur Lagerung und Führung der radial außen liegenden Segmente 18, 20, 21 und 23, das untere Führungsteil 30b entsprechend zur Lagerung und Führung der radial innen liegenden Segmente 19 und 22. Zu diesem Zweck sind die radial inneren Segmente 19 und 22 an ihren oberen Enden mit radial nach innen ragenden Armen 31 (Fig. 2) versehen, die U-förmig ausgebildete, auf die unteren Führungsteile 30b aufgeschobene und diese klammerartig umgreifende Gleitelemente 32 aufweisen. Entsprechend sind die radial äußeren Segmente 18, 20, 21 und 23 an ihren oberen Enden mit radial nach innen ragenden Armen 33 versehen, die oberhalb der Arme 31 zu liegen kommen und ebenfalls U-förmig ausgebildete Gleitelemente 34 aufweisen, die auf die oberen Führungsteile 30a aufgeschoben sind und diese klammerartig umgreifen. Dabei sind die Arme 33 und die übrigen Abschnitte der äußeren Segmente 19, 20, 21 und 23 so ausgebildet, daß sie oberhalb der Arme 31 und der anderen Abschnitte der inneren Segmente 19, 22 liegen und diese daher beim beschriebenen Verschieben der Segmente 18 bis 23 überlaufen können. Entsprechend sind die Führungselemente 32, 34 so ausgebildet und angeordnet, daß sie ein überlapptes Verschieben der Segmente 18 bis 23 nicht behindern. Alternativ wäre es natürlich auch möglich, die Segmente 18, 20, 21 und 22 radial innen und die Segmente 19, 22 radial außen anzuordnen. Außerdem könnten die Laufrollen 28 durch entsprechende Führungen ersetzt werden.

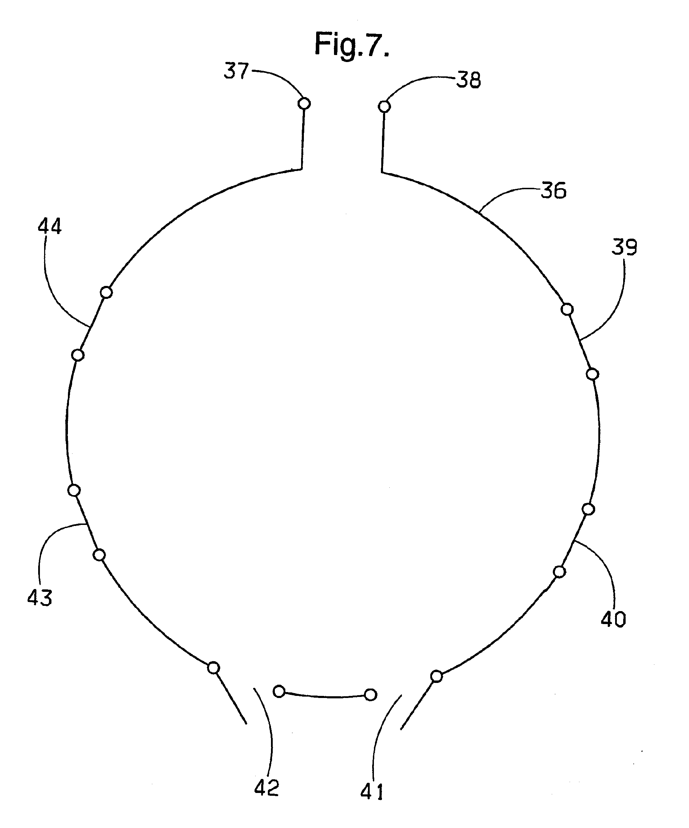

Fig. 7 zeigt schematisch eine zur automatischen Steuerung der Rundstrickmaschine bestimmte elektrische Leitung 36 mit zwei Anschlüssen 37 und 38. In der Leitung 36 sind sechs Schalter bzw. Kontakte 39 bis 44 in Reihenschaltung angeordnet, wobei jeder Schalter 39 bis 44 einem der Segmente 18 bis 23 zugeordnet ist. Die Schalter 39 bis 44 sind geschlossen, so daß ein Stromfluß durch die Leitung 36 möglich ist, wenn sich alle zugeordneten Segmente 18 bis 23 in ihrer Schließstellung nach Fig. 3 befinden. Wird dagegen eines der Segmente 18 bis 23 zumindest teilweise in eine Offenstellung nach Fig. 4 bis 6 verschoben, dann ist der betreffende Schalter 39 bis 44 geöffnet und ein Stromfluß durch die Leitung 36 nicht möglich. Dabei entspricht die aus Fig. 7 ersichtliche Schalterstellung z. B. dem in Fig. 4 gezeigten Zustand der Schutzabdeckung 17. Ist die Leitung 36 z. B. ein Teil der Zuführleitung für den elektrischen Antriebsmotor der Rundstrickmaschine, dann kann mit ihr auf einfache Weise sichergestellt werden, daß der Antriebsmotor nur eingeschaltet werden kann, wenn sich alle Segmente 18 bis 23 in ihrer Schließstellung nach Fig. 3 befinden. Die Schalter 39 bis 44 können als mechanische Endschalter, als magnetische Näherungsschalter oder sonstwie ausgebildet sein.

Die Erfindung ist nicht auf das beschriebene Ausführungsbeispiel beschränkt, das auf vielfache Weise abgewandelt werden kann. Beispielsweise wäre es möglich, zum Abdecken bzw. Freigeben aller oder ausgewählter Räume 25 bis 27 zwischen den Füßen 2 bis 4 jeweils nur ein einziges Segment mit einer der Breite des betreffenden Raums entsprechenden Breite vorzusehen. Weiter wäre es möglich, den Segmenten 19 und 22 in Umfangsrichtung eine solche Breite zu geben, daß sie in der Schließstellung abweichend von Fig. 3 nur gerade bis zu den Seitenfüßen 3, 4 heranreichen. Die aus Fig. 3 ersichtliche Überdeckung bietet jedoch den zusätzlichen Vorteil, daß zwischen den Segmenten und den Seitenfüßen keine störenden Spalte entstehen, die Anlaß für Verletzungen in den mit den Händen oder Füßen zugänglichen Bereichen sein könnten. Weiterhin ist klar, daß anstelle der beispielhaft dargestellten Führung 24 auch andere zweckmäßige Führungen vorgesehen werden könnten. Insbesondere ist es zur Verbesserung der Gleiteigenschaften der Segmente möglich, die Gleitelemente 32, 34 mit Hilfe von Kugel- oder Rollenlagern auf den zugehörigen Führungsteilen 30a, 30b zu lagern. Dabei wäre es auch möglich, die Segmente mit mehr als zwei unterschiedlichen radialen Abständen zur Maschinenachse 11 anzuordnen und dementsprechend mehr als zwei zugeordnete Führungsteile vorzusehen. Denkbar wäre auch, jedem vorhandenen Segment eine eigene Führung derart zuzuordnen, daß alle Segmente beliebig am Umfang der Rundstrickmaschine verschoben werden können und nicht durch Anstoßen an ein auf demselben Führungsteil gleitendes Segment, sondern allenfalls durch Anstoßen an den Hauptfuß 2 in ihrer Verschiebbarkeit begrenzt werden. Außerdem besitzen die einzelnen Segmente zumindest in ihren unteren Abschnitten vorzugsweise eine dem Umfangskreis, auf dem sie bewegt werden, entsprechende, gebogene, insbesondere längs Zylinderflächen verlaufende Form, während sie in ihren oberen Abschnitten vorzugsweise längs Konusflächen verlaufen. Alternativ könnten die Segmente unterhalb der Arme 31, 33 aber auch mit weitgehend vertikal bzw. schräg verlaufenden, ebenen Abschnitten versehen sein, in welchem Fall die Schutzabdeckung 17 einen im wesentlichen mehreckigen Querschnitt erhalten würde. Weiter können die Segmente, in Umfangsrichtung betrachtet, unterschiedlich breit sein, wie z. B. in Fig. 3 für die im Vergleich zu den Segmenten 18 und 23 breiteren Segmente 19 bis 22 dargestellt ist, insbesondere wenn die Winkelabstände der Füße voneinander unterschiedlich groß sind, wobei natürlich auch mehr als drei Füße vorhanden sein könnten. Abgesehen davon wäre es möglich, die einzelnen Segmente auf einer Kreisbahn zu bewegen, deren Radius höchstens gleich dem Radius eines von den radial innen liegenden Endflächen der Füße begrenzten Inkreises ist, sofern hierfür zwischen den Füßen und der Abzugs- und/oder Aufwickelvorrichtung 15 ausreichend Platz gelassen wird. Abgesehen davon sind in diesem Zusammenhang auch Lösungen denkbar, bei denen die Führung 24 nicht oder nicht allein am Gestell 1 befestigt wird. Dies gilt insbesondere in Fällen, in denen eine Rundstrickmaschine in einem separaten, eng begrenzten Raum aufgestellt wird, der z. B. mit das Anbringen der Führung ermöglichenden Pfeilern, Säulen od. dgl. versehen ist, oder in denen die Segmente 18 bis 23 als Teile eines die Rundstrickmaschine umgebenden Schutzgitters ausgebildet sind. Schließlich versteht sich, daß die verschiedenen Merkmale auch in anderen als den dargestellten und beschriebenen Kombinationen angewendet werden können.

## Patentansprüche

1. Rundstrickmaschine, enthaltend: ein Gestell (1), das eine Mehrzahl von Füßen (2, 3, 4) und einen von diesen abgestützten Tragring (5) enthält, am Gestell (1) montierte Mittel (6 bis 9) zur Herstellung einer schlauchförmigen Strickware, eine unterhalb des Tragrings (5) angeordnete Vorrichtung (15) zum Abzug und/oder zum Aufwickeln der Strickware und eine die Vorrichtung (15) von außen zumindest teilweise umgebende Schutzabdeckung (17), die eine Führung (24) und an dieser verschiebbar gelagerte Segmente (18 bis 23) enthält, die zwischen einer den Zugang zur Vorrichtung (15) ermöglichenden Offenstellung und einer den Zugang zur Vorrichtung (15) verhindernden Schließstellung verschiebbar sind, **dadurch gekennzeichnet, daß** die Segmente (18 bis 23) mit unterschiedlichen radialen Abständen von einer Maschinenachse (11) und derart angeordnet sind, daß sie zumindest teilweise mit gegenseitiger Überlappung relativ zueinander verschiebbar sind.

2. Rundstrickmaschine nach Anspruch 1, **dadurch gekennzeichnet, daß** zwischen je zwei Füßen (2, 3, 4) befindliche Räume (25, 26, 27) durch wenigstens je ein verschiebbares Segment (18 bis 23) wahlweise abdeckbar und freigebbar sind.

3. Rundstrickmaschine nach Anspruch 2, **dadurch gekennzeichnet, daß** die Segmente (18 bis 23) so ausgebildet und an der Führung (24) gelagert sind, daß sie zum Abdecken bzw. Freigeben der zwischen den Füßen befindlichen Räume (25, 26, 27) wahlweise in entgegengesetzte Richtungen verschiebbar sind.

4. Rundstrickmaschine nach einem der Ansprüche 1 bis 3, **dadurch gekennzeichnet, daß** die Führung (24) so ausgebildet ist, daß die Segmente (18 bis 23) mit größeren radialen Abständen von der Maschinenachse (11) als radiale Endflächen (3a, 4a) ausgewählter Füße (3, 4) angeordnet sind.

5. Rundstrickmaschine nach Anspruch 4, **dadurch gekennzeichnet, daß** sie einen radial längeren Hauptfuß (2) und zwei radial kürzere Seitenfüße (3, 4) aufweist und die Segmente (18 bis 23) mit größeren radialen Abständen als die Endflächen (3a, 4a) der Seitenfüße (3, 4), aber mit kleineren radialen Abständen als eine radiale Endfläche (2a) des Hauptfußes von der Maschinenachse (11) angeordnet sind.

6. Rundstrickmaschine nach einem der Ansprüche 1 bis 5, **dadurch gekennzeichnet, daß** den zwischen je zwei Füßen (2, 3, 4) befindlichen Räumen (25, 26, 27) je zwei Segmente (18, 19; 20, 21; 22, 23) zugeordnet sind.

7. Rundstrickmaschine nach einem der Ansprüche 1 bis 6, **dadurch gekennzeichnet, daß** die Segmente (18 bis 23) mit oberen Enden an zugeordneten Führungsteilen (30a, 30b) und an unteren Enden auf Laufrollen (28) abgestützt sind.

8. Rundstrickmaschine nach einem der Ansprüche 1 bis 7, **dadurch gekennzeichnet, daß** die Führung (24) einen kreisbogenförmig ausgebildeten Träger (30) aufweist, der ein erstes Führungsteil (30a) zur Lagerung wenigstens eines radial außen liegenden und ein zweites Führungsteil (30b) zur Lagerung wenigstens eines radial innen liegenden Segments (18 bis 23) aufweist.

9. Rundstrickmaschine nach Anspruch 8, **dadurch gekennzeichnet, daß** der Träger (30) am Tragring (5) und/oder an den Füßen (2, 3, 4) befestigt ist.

10. Rundstrickmaschine nach Anspruch 8 oder 9, **dadurch gekennzeichnet, daß** die Segmente (18 bis 23) mit Kugel- oder Rollenlagern auf den Führungsteilen (30a, 30b) abgestützt sind.

11. Rundstrickmaschine nach einem der Ansprüche 1 bis 10, **dadurch gekennzeichnet, daß** die Schutzabdeckung (17) rundum aus verschiebbaren Segmenten (18 bis 23) gebildet ist.

12. Rundstrickmaschine nach einem der Ansprüche 1 bis 11, **dadurch gekennzeichnet, daß** die Führung (24) am Gestell (1) befestigt ist.

13. Schutzvorrichtung für eine Rundstrickmaschine, **dadurch gekennzeichnet, daß** sie eine nach einem oder mehreren der Ansprüche 1 bis 12 ausgebildete Schutzabdeckung (17) aufweist.

14. Schutzvorrichtung nach Anspruch 13, **dadurch gekennzeichnet, daß** die Schutzabdeckung (17) ganz oder teilweise in ein zur Umrahmung einer Rundstrickmaschine bestimmtes Schutzgitter integriert ist.
